# EUROPÄISCHE PATENTSCHRIFT

(11) **EP 2 033 553 B1**
(45) Veröffentlichungstag und Bekanntmachung des Hinweises auf die Patenterteilung: **13.10.2010**
(21) Anmeldenummer: 08014946.1
(22) Anmeldetag: 23.08.2008
(51) Int. Cl.: A47J 39/00

(54) **Andockstation mit kühlbaren Heizplatten**
Docking station with coolable heating plates
Station d'amarrage comprenant des plaques chauffantes pouvant être refroidies

(30) Priorität: 07.09.2007 DE 102007042730
(43) Veröffentlichungstag der Anmeldung: 11.03.2009
(73) Patentinhaber: HUPFER Metallwerke GmbH & Co. KG, 48653 Coesfeld (DE)
(72) Erfinder: Schumacher, Helmut, 48653 Coesfeld (DE)
(74) Vertreter: Habbel, Ludwig

(56) Entgegenhaltungen:
- EP-A- 1 116 465
- EP-A- 1 929 908
- DE-U1- 20 210 556
- FR-A- 2 037 447
- US-A- 5 771 959

## Beschreibung

Die Erfindung betrifft eine Andockstation gemäß den Merkmalen des Anspruchs 1.

Aus der DE 20 2006 009 365 U1 ist eine gattungsgemäße Andockstation bekannt. Insbesondere, wenn die Heizplatten als Induktionsplatten ausgestaltet sind, in der Praxis auch als so genannte Spulenträger bezeichnet, kann eine sehr differenzierte Beheizung der Tabletts in einem Tablett-Transportwagen erfolgen, so dass auf den Tabletts Bereiche mit gekühlten Lebensmitteln vorgesehen sein können und nur punktuell bestimmte Lebensmittel erwärmt werden. Für die gekühlten Lebensmittel ist die Einhaltung einer Kühlkette vorgeschrieben, d. h. bis die Lebensmittel den Endverbraucher erreichen, beispielsweise Patienten in einem Krankenhaus oder Gäste in einer Großküche, dürfen diese gekühlten Lebensmittel eine vorgegebene, vergleichsweise niedrige Höchsttemperatur nicht überschreiben.

Eine Andockstation gemäß dem Oberbegriff von Anspruch 1 ist auch aus FR 2 037 447 A bekannt.

Der Erfindung liegt die Aufgabe zugrunde, eine gattungsgemäße Andockstation dahingehend zu verbessern, dass diese eine möglichst optimale Präsentation der Speisen ermöglicht und möglichst zuverlässig das Einhalten einer Kühlkette für gekühlte Speisen sicherzustellen hilft.

Diese Aufgabe wird durch eine Andockstation mit den Merkmalen des Anspruchs 1 gelöst.

Die Erfindung schlägt mit anderen Worten vor, die Bestandteile einer Andockstation kühlbar auszugestalten, die mit einem Tablett-Transportwagen in Kontakt kommen, der seinerseits vorgekühlt ist und gekühlte Speisen enthält. Diese mit dem Tablett-Transportwagen in Kontakt kommenden Elemente sind einerseits die Heizplatten, die sich in das Innere des Tablett-Transportwagens und unter die jeweiligen Speisentabletts erstrecken und andererseits die Heizplattenaufnahme, die zwar Bestandteil der Andockstation ist, aber für den an einer Seite geöffneten und an die Andockstation herangeschobenen Tablett-Transportwagen nun eine Verschlusswand des Innenraums des Tablett-Transportwagens bildet.

Um diese Elemente der Andockstation herabkühlen zu können und dazu möglichst wenig Energie zu benötigen, ist vorschlagsgemäß vorgesehen, dass die ansonsten frei in den Raum ragenden Heizplatten mittels eines Verschlusselementes "eingehaust" werden können. So wird ein Raum geschaffen, der bei geschlossenem Verschlusselement mit vergleichsweise geringem Energieaufwand und unter Verwendung handelsüblicher kleiner Kühlaggregate vorgekühlt werden kann.

Wenn nun der Tablett-Transportwagen an die Andockstation gefahren werden soll, wird zunächst das Verschlusselement aus seiner geschlossenen Stellung in eine geöffnete Stellung verfahren, in welcher es sich die zuvor geschlossenen Seiten des kühlbaren Raumes der Andockstation freigibt. Der Tablett-Transportwagen kann nun in an sich bekannter Weise an die Andockstation angekoppelt werden.

Da nun durch diesen Ankopplungsvorgang der gesamte vorgekühlte Raum durch den Tablett-Transportwagen einerseits und die ebenfalls vorgekühlte Heizplattenaufnahme andererseits verschlossen wird und sich auch die Heizplatten selbst auf dem niedrigen, vorgekühlten Temperaturniveau befinden, sind Kondensationserscheinungen im Inneren dieses Innenraums zuverlässig vermieden, was der Qualität der Speisen zugute kommt. Zudem ist hierdurch sichergestellt, dass kein Temperaturausgleich stattfindet zwischen warmen, auf Zimmertemperatur befindlichen Bestandteilen der Andockstation und dem vorgekühlten Inneren des Tablett-Transportwagens, so dass ein unzulässiger Temperaturanstieg, der nämlich über die in den Tablett-Transportwagen bewusst eingebrachte Heizleistung hinausgeht, vermieden werden kann.

Das Verschlusselement kann beispielsweise als eine Art Haube ausgestaltet werden, welche die Heizplatten umgibt und welche abnehmbar an der Andockstation vorgesehen ist. Vorteilhaft kann diese Haube als Tür ausgestaltet sein, so dass die Handhabung vereinfacht ist, indem das Verschlusselement stets fest an der übrigen Andockstation verbleibt. Insbesondere kann vorteilhaft vorgesehen sein, dass die haubenartige Tür zweiflüglig ausgestaltet ist, so dass der für das Verschlusselement erforderliche Bewegungsraum möglichst klein bemessen ist und dementsprechend die Aufstellung der vorschlagsgemäßen Andockstation unproblematisch auch bei vergleichsweise beengten Platzverhältnissen möglich ist.

Vorteilhaft kann vorgesehen sein, dass die Heizplatten zwischen zwei Wangen angeordnet sind. Beispielsweise kann das Gehäuse der Andockstation seitlich weiter nach vorn gezogen werden als bei der gattungsgemäßen Andockstation, so dass nun ein Raum zwischen zwei seitlichen Wangen geschaffen wird, in welchem sich die Heizplatten und die Heizplattenaufnahme befinden. Dieser Raum ist nach drei Seiten offen, nämlich nach oben, nach vorn - also zum Tablett-Transportwagen hin, und nach unten, so dass eine problemlose Ankopplung des Tablett-Transportwagen ermöglicht wird. Das Verschlusselement kann diese drei offenen Seiten wahlweise freigeben oder verschließen. Bei dieser Anordnung kann die Andockstation schmal ausgestaltet werden und keinen seitlichen Platz benötigen, wie er ansonsten beispielsweise zum Öffnen von seitlich öffnenden Türen erforderlich wäre.

Vorteilhaft kann das Verschlusselement möglichst platzsparend in seiner geöffneten Stellung untergebracht werden, indem es als verformbare Jalousie ausgestaltet ist. Hierzu kann in an sich bekannter Weise das Verschlusselement aus einer Vielzahl von Leisten gebildet sein oder es kann als flexibler Behang ausgestaltet sein. In beiden Fällen ist es aus dem Stand der Technik bekannt, derartige Jalousien auch thermisch isoliert auszugestalten.

Vorteilhaft kann das Verschlusselement in seiner geöffneten Stellung im Dach der Andockstation untergebracht sein. Das Dach kann sich über den zu kühlenden Bereich der Andockstation erstrecken. Es kann jedoch auch bewusst vorgesehen sein, das Dach nicht länger als bei den gattungsgemäßen Vorrichtungen auszugestalten, so dass das Verschlusselement drei Seiten des zu kühlenden Raums umschließt, nämlich die Oberseite, die Frontseite und die Unterseite. Auf diese Weise ist eine Höhenanpassung des Daches an den noch unter dem Dach aufzunehmenden Tablett-Transportwagen nicht erforderlich, so dass Tablett-Transportwagen unterschiedlichster Höhe an die Andockstation angeschlossen werden können, beispielsweise wahlweise Tablett-Transportwagen mit oder ohne auf ihrem Dach vorgesehener Reling oder ähnlicher Anbauten.

Die Führungen, um das Verschlusselement zwischen den beiden seitlichen Wangen zu führen, können in einfacher Weise als Nuten bzw. U-förmige Profilleisten ausgestaltet sein. Insbesondere können die Nuten in die Wangen eingelassen sein, so dass kein hinderlicher Überstand den Andockvorgang des Tablett-Transportwagens stört, und so dass die Führungen vor Stößen, Verformungen und dergleichen optimal geschützt sind.

Vorteilhaft können die Führungen im Dach der Andockstation spiralförmig verlaufen, so dass ein langes Verschlusselement auf vergleichsweise geringem Raum untergebracht werden kann. Auf diese Weise können die Außenabmessungen der Andockstation vorteilhaft gering gehalten werden und so kann der häufig begrenzte Stellplatz in Großküchen optimal genutzt werden. Ein höherer Dachaufbau, um die spiralförmig verlaufenden Führungen im Dach der Andockstation aufzunehmen, ist angesichts der Raumhöhe unproblematisch.

Vorteilhaft kann die erforderliche Kühlleistung der Andockstation minimiert sein, indem der vorzukühlende Bereich thermisch isoliert ist. Abgesehen von einer vorteilhaften thermischen Isolierung des Verschlusselementes selbst sind daher auch die beiden seitlichen Wangen thermisch isoliert ausgestaltet sowie der Bereich der Andockstation, der an die Heizplattenaufnahme grenzt. Auf diese Weise kann die Heizplattenaufnahme mitsamt den Heizplatten herabgekühlt werden, während der übrige Bereich der Andockstation die Temperatur des umgebenden Raumes annehmen kann.

Vorteilhaft kann vorgesehen sein, dass sämtliche Dichtungen, die den von dem Verschlusselement begrenzten, die Heizplatten aufnehmende Raum gegenüber der Umgebung abdichten, ausschließlich an Bauteilen der Andockstation anliegen. Somit wird eine hygienisch nachteilige Verschmutzung der Dichtung vermieden, die ansonsten nicht auszuschließen wäre, wenn beispielsweise ein haubenförmiges Verschlusselement, welches keine eigene Bodenfläche aufweist, bis auf den Fußboden reichen würde, auf dem die Andockstation aufsteht, so dass der Fußboden in einem solchen Fall eine Begrenzungsfläche des Raumes bilden würde, in welchem die Heizplatten vorgekühlt werden. Die - bei induktiven Heizeinrichtungen auch als Spulenträger bezeichneten - Heizplatten sind somit vorzugsweise mittels des Verschlusselementes einschließbar, ohne hierzu einen Bodenkontakt zu schaffen.

Üblicherweise ist im unteren Bereich der Heizplattenaufnahme ohnehin eine Dichtfläche vorgesehen, an welcher der Tablett-Transportwagen anliegt, wenn der Ankopplungsvorgang beendet ist. Auf diese Weise werden Kühlverluste, insbesondere angesichts der nach unten absinkenden kalten Luftmassen vermieden. Diese Dichtfläche ist üblicherweise als elastische Dichtung ausgestaltet, welcher der Tabletttransportwagen mit seinem Gehäuse anliegt. Eine solche, an der Andockstation ohnehin vorhandene Dichtung kann vorteilhaft genutzt werden, um eine thermisch isoliert optimale dichte Anlage des Verschlusselementes mit dessen Stirnkante zu ermöglichen, also mit der Kante, mit der das Verschlusselement aus seiner geöffneten Stellung in die geschlossene Stellung verfahren wird und die bei dieser Bewegungsrichtung die vorderste Kante des Verschlusselementes darstellt. Auf der übrigen Länge des Verschlusselementes kann eine Isolierung an seinen beiden Seitenkanten durch eine optimale Anpassung an die Führungen, beispielsweise an die vorerwähnten Nuten erfolgen, wobei die thermische Abdichtung entlang dieser beiden Seitenkanten des Verschlusselementes durch zusätzliche Dichtleisten unterstützt und verbessert werden kann.

Ein Ausführungsbeispiel der Erfindung wird anhand der rein schematischen Darstellungen nachfolgend näher erläutert. Dabei zeigt
- Fig. 1: eine perspektivische Ansicht von schräg unten auf eine Andockstation, mit freiem Zugang zu den Heizelementen, und
- Fig. 2: die Andockstation von Fig. 1 in gleicher Blickrich- tung, jedoch bei geschlossenem Verschluss- element.

In den Zeichnungen ist mit 1 insgesamt eine Andockstation bezeichnet, die ein Gehäuse 2 aufweist, welches auf Stützen 3 aufsteht, ein oberes Dach 4 aufweist und eine Heizplattenaufnahme mit einer Vielzahl von Heizplatten 5 aufnimmt. Von der Unterseite ist ersichtlich, dass das Gehäuse 2 eigentlich vergleichsweise flach bemessen ist, um Antriebselemente und dergleichen für die Heizplattenaufnahme aufzunehmen, und dass sich vor das eigentliche Gehäuse die Heizplatten 5 erstrecken. Seitlich sind die Heizplatten 5 durch Wangen 6 geschützt, die von dem Gehäuse 2 ausgebildet werden, so dass das Gehäuse 2 insgesamt vergleichsweise großvolumig erscheint, da sich die Seitenwände des Gehäuses 2, welche die Wangen 6 ausbilden, und auch das Dach 4 weit nach vorn erstrecken, so dass insgesamt die Heizplatten 5 innerhalb der Umfangskonturen des Gehäuses 2 angeordnet sind.

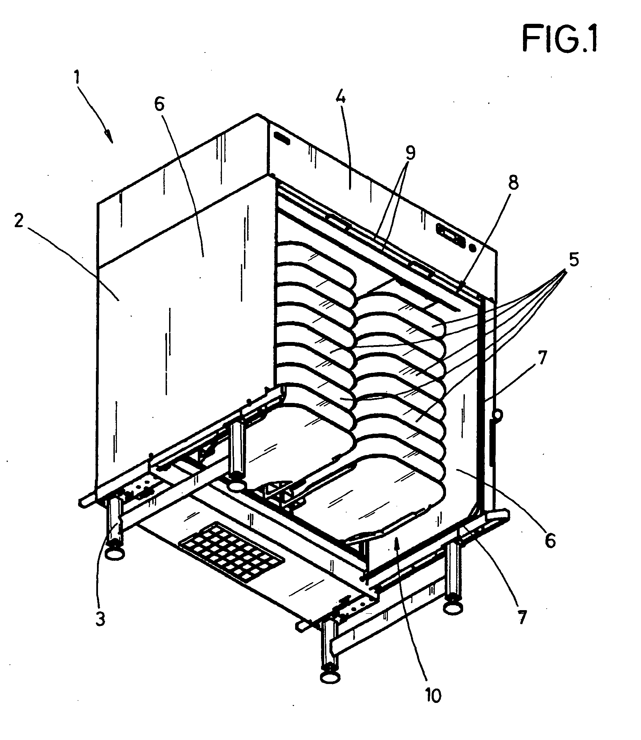

Das Gehäuse 2 weist insbesondere in dem Bereich der Wangen 6 Führungen 7 auf, in denen ein flexibles Verschlusselement 8 verfahrbar ist. Fig. 1 zeigt das Verschlusselement 8 in seiner geöffneten Stellung, so dass nur zwei untere Leisten 9 des Verschlusselementes 8 unterhalb des Daches 4 ersichtlich sind.

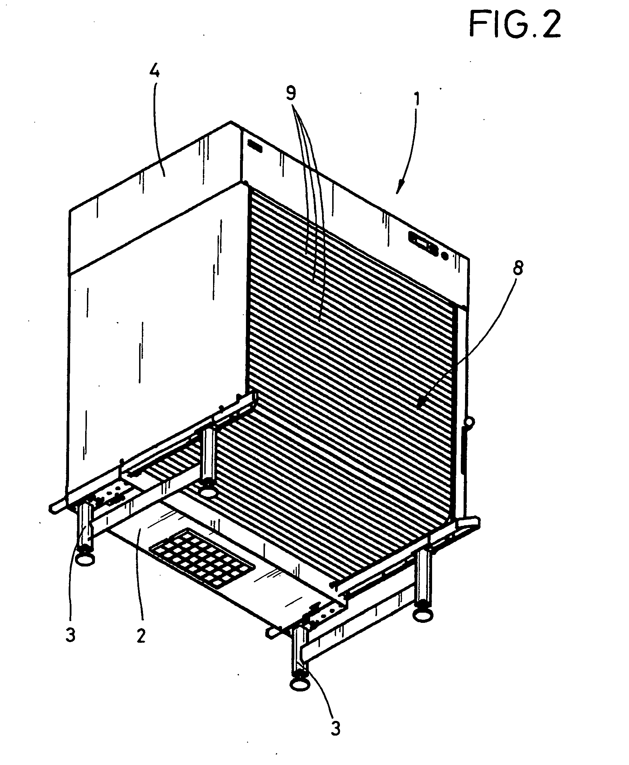

Fig. 2 hingegen zeigt das Verschlusselement 8 in seiner Schließstellung und es ist ersichtlich, dass das Verschlusselement 8 aus einer Vielzahl solcher Leisten 9 gebildet ist, so dass es kurvig geführt werden kann. Auf diese Weise ist das Verschlusselement 8 entlang der vorderen Front der Andockstation 1 nach unten geführt, im Bereich der beiden vorderen Seitenkanten der beiden Wangen 6, und anschließend um die Kurve geführt, in seiner geschlossenen Stellung unterhalb der Heizplatten 5 am Gehäuse 2 anliegt. Ein Raum 10, in dem sich die Heizplatten 5 befinden, ist auf diese Weise ausschließlich von Bestandteilen der Andockstation 1 umgrenzt und abgeschlossen, nämlich einerseits von dem L-förmig bzw. J-förmig geführten Verschlusselement 8, andererseits von dem Dach 4 und dem Gehäuse 2 dort, wo die Heizplattenaufnahme vorgesehen ist. Der Raum 10 ist allseitig durch die Andockstation 1 begrenzt und nicht etwa nach unten offen, so dass der Raum 10 hygienisch vorteilhaft allseitig begrenzt ist und mit vergleichsweise geringer Kühlleistung vorgekühlt werden kann, da beispielsweise nicht eine Fläche des Bodens mitgekühlt werden muss, auf welchem die Andockstation 1 aufsteht.

## Patentansprüche

1. Andockstation zum Erwärmen von Speisen, welche in einem Transportwagen auf einer Vielzahl von im Abstand übereinander angeordneten Ebenen angeordnet sind, wobei die Andockstation eine Vielzahl von Heizplatten aufweist, die
■ an einer gemeinsamen Heizplattenaufnahme gehalten sind,
■ sich bei an dem Gehäuse anliegendem Transportwagen in den Transportwagen erstrecken,
■ übereinander in Abständen angeordnet sind, welche den Abständen der übereinander angeordneten Ebenen entspricht,
■ und die von der Heizplattenaufnahme frei in den Raum ragen, wobei
an der Andockstation (1) wenigstens ein Verschlusselement (8) vorgesehen ist, welches beweglich ist
■ zwischen einer geöffneten Stellung, in welcher der Transportwagen an die Andockstation (1) ankoppelbar ist und sich die Heizplatten (5) in den Transportwagen erstrecken,
■ und einer geschlossenen Stellung, in welcher das Verschlusselement (8) die Heizplatten (5) nach außen abdeckt, derart, dass die Heizplatten (5) in einem allseitig geschlossenen Raum (10) angeordnet sind,
wobei der von dem Verschlusselement (8) begrenzte, die Heizplatten (5) aufnehmende Raum (10) kühlbar ist, **dadurch gekennzeichnet, dass** die Andockstation unterhalb der Heizplatten offen ausgestaltet ist.

2. Andockstation nach Anspruch 1,
**dadurch gekennzeichnet,**
**dass** das Verschlusselement als eine haubenartige Tür ausgestaltet ist.

3. Andockstation nach Anspruch 2,
**dadurch gekennzeichnet,**
**dass** die Tür zweiflüglig ausgestaltet ist.

4. Andockstation nach Anspruch 1,
**dadurch gekennzeichnet,**
**dass** die Heizplattenaufnahme und die Heizplatten (5) zwischen zwei seitlichen Wangen (6) der Andockstation (1) angeordnet sind,
und **dass** an den Wangen (6) Führungen (7) für ein Verschlusselement (8) vorgesehen sind,
und **dass** das Verschlusselement (8) mittels der Führungen (7) beweglich zwischen der geöffneten Stellung und der geschlossenen Stellung geführt ist.

5. Andockstation nach Anspruch 1 oder 4,
**dadurch gekennzeichnet,**
**dass** das Verschlusselement (8) als aus einer Vielzahl einzelner Leisten (9) gebildete Jalousie ausgestaltet ist.

6. Andockstation nach Anspruch 1 oder 4,
**dadurch gekennzeichnet,**
**dass** das Verschlusselement als aus einem flexiblen Behang gebildete Jalousie ausgestaltet ist.

7. Andockstation nach einem der vorhergehenden Ansprüche,
**dadurch gekennzeichnet,**
**dass** das Verschlusselement (8) in seiner geöffneten Stellung im Dach (4) der Andockstation (1) angeordnet ist.

8. Andockstation nach Anspruch 7,
**dadurch gekennzeichnet,**
**dass** die Führungen (7) im Dach (4) der Andockstation (1) spiralförmig verlaufen.

9. Andockstation nach einem der vorhergehenden Ansprüche,
**dadurch gekennzeichnet,**
**dass** das Verschlusselement (8) thermisch isoliert ausgestaltet ist.

10. Andockstation nach einem der vorhergehenden Ansprüche,
**dadurch gekennzeichnet,**
**dass** das Gehäuse (2) der Andockstation (1) zumindest in dem Bereich der beiden Wangen (6) und in einem Bereich, der an die Heizplattenaufnahme grenzt, thermisch isoliert ausgestaltet ist.

11. Andockstation nach einem der vorhergehenden Ansprüche,
**dadurch gekennzeichnet,**
**dass** sämtliche Dichtungen, die den von dem Verschlusselement (8) begrenzten, die Heizplatten (5) aufnehmenden Raum (10) gegenüber der Umgebung abdichten, ausschließlich an Bauteilen der Andockstation (1) anliegen.

12. Andockstation nach Anspruch 11,
**dadurch gekennzeichnet,**
**dass** das Verschlusselement (8) in seiner geschlossenen Stellung an einer Dichtfläche anliegt, die unten an der Heizplattenaufnahme vorgesehen ist.

13. Andockstation nach Anspruch 12,
**dadurch gekennzeichnet,**
**dass** die Dichtfläche als elastische Dichtung ausgestaltet ist.

## Claims

1. Docking station for heating food arranged on a number of levels disposed at intervals one above the other in a transport means, which docking station incorporates a number of heating elements which
• are disposed on a common heating element holder,
• extend into a transport means positioned against the housing,
• are disposed one above the other at intervals which correspond to the intervals between the levels disposed one above the other
• and which project from the heating element holder freely into the space, where
at least one closing element (8) is provided for on the docking station (1), which closing element (8) can be moved
• between an opened position in which the transport means can be coupled to the docking station (1) and the heating elements (5) extend into the transport means
• and a closed position in which the closing element (8) closes the heating elements (5) off so that the heating elements (5) are disposed in a space (10) enclosed on all sides,
where the space (10) bounded by the closing element (8) and enclosing the heating elements (5) can be cooled down,
**characterised in that**
the docking station is constructed so as to be open below the heating elements.

2. Docking station in accordance with claim 1,
**characterised in that**
the closing element is constructed as a cover-like door.

3. Docking station in accordance with claim 2,
**characterised in that**
the door is constructed in two parts.

4. Docking station in accordance with claim 1,
**characterised in that**
the heating element holder and the heating elements (5) are disposed between two side portions (6) of the docking station (1) and that guide members (7) for a closing element (8) are provided for on the side portions (6)
and that the closing element (8) is moveably guided between the opened and the closed position by means of the guide members (7).

5. Docking station in accordance with claim 1 or 4,
**characterised in that**
the closing element (8) is constructed as a slatted member formed from a number of individual strips (9).

6. Docking station in accordance with claim 1 or 4,
**characterised in that**
the closing element is constructed as a slatted member formed from flexible hanging material.

7. Docking station in accordance with any one of the foregoing claims,
**characterised in that**
the closing element (8) in its opened position is disposed in the top portion (4) of the docking station.

8. Docking station in accordance with claim 7,
**characterised in that**
the guide members (7) are disposed in the form of a spiral in the top portion (4) of the docking station (1).

9. Docking station in accordance with any one of the foregoing claims,
**characterised in that**
the closing element (8) is constructed so as to be thermally insulated.

10. Docking station in accordance with any one of the foregoing claims, **characterised in that**
the housing (2) of the docking station (1) at least in the area of the two side portions (6) and in an area abutting on the heating element holder is constructed so as to be thermally insulated.

11. Docking station in accordance with any one of the foregoing claims, **characterised in that**
all the sealing members which seal off from the surrounding area the space (10) bounded by the closing element (8) and enclosing the heating elements (5) rest only against component parts of the docking station (1).

12. Docking station in accordance with claim 11,
**characterised in that**
the closing element (8) in its closed position rests against a sealing surface provided for at the bottom on the heating element holder.

13. Docking station in accordance with claim 12,
**characterised in that**
the sealing surface is constructed as a flexible sealing member.

## Revendications

1. Poste d'accueil destiné à échauffer des repas agencés dans un chariot de transport sur un grand nombre de niveaux superposés distants les uns des autres,
le poste d'accueil présentant un grand nombre de plaques chauffantes qui
• sont retenues par un réceptacle conjoint pour plaques chauffantes
• pénètrent dans le chariot de transport lorsque ledit chariot se trouve contre le corps du poste,
• sont superposées à certaines distances les unes des autres, distances qui correspondent à celles des niveaux superposés,
• et qui font librement saillie dans l'espace par rapport au réceptacle des plaques chauffantes,
sachant que contre le poste d'accueil (1) est prévu au moins un élément d'obturation (8) se déplaçant
• entre une position ouverte dans laquelle le chariot de transport est accouplable au poste d'accueil (1) et dans laquelle les plaques chauffantes (5) s'étendent jusque dans le chariot de transport,
• et une position fermée dans laquelle l'élément d'obturation (8) recouvre les plaques chauffantes (5) par rapport à l'extérieur, de sorte que les plaques chauffantes (5) se trouvent dans un volume (10) fermé sur tous ses côtés,
sachant que le volume (10) délimité par l'élément d'obturation (8) et recevant les plaques chauffantes (5) est réfrigérable,
**caractérisé en ce que**
le poste d'accueil est configuré ouvert en dessous des plaques chauffantes.

2. Poste d'accueil selon la revendication 1,
**caractérisé en ce que**
l'élément d'obturation est une porte configurée en forme de capot.

3. Poste d'accueil selon la revendication 2,
**caractérisé en ce que**
la porte est configurée à deux battants.

4. Poste d'accueil selon la revendication 1,
**caractérisé en ce que**
le réceptacle des plaques chauffantes et les plaques chauffantes (5) sont agencés entre deux parois latérales (6) du poste d'accueil (1), et **en ce que** contre les parois (6) sont prévus les guidages (7) d'un élément d'obturation (8),
et **en ce que** l'élément d'obturation (8) est guidé de façon mobile par les guidages (7) entre la position ouverte et la position fermée.

5. Poste d'accueil selon la revendication 1 ou 4,
**caractérisé en ce que**
l'élément d'obturation (8) est configuré en forme de persienne formée par un grand nombre de bandeaux (9) individuels.

6. Poste d'accueil selon la revendication 1 ou 4,
**caractérisé en ce que**
l'élément d'obturation est configuré en forme de persienne formée par une tenture flexible.

7. Poste d'accueil selon l'une des revendications précédentes,
**caractérisé en ce que**
l'élément d'obturation (8) est agencé, lorsque en position ouverte, dans le toit (4) du poste d'accueil (1).

8. Poste d'accueil selon la revendication 7,
**caractérisé en ce que**
les guidages (7) dans le toit (4) du poste d'accueil (1) présentent un tracé en spirale.

9. Poste d'accueil selon l'une des revendications précédentes,
**caractérisé en ce que**
l'élément d'obturation (8) a été configuré isolé thermiquement.

10. Poste d'accueil selon l'une des revendications précédentes,
**caractérisé en ce que**
le corps (2) du poste d'accueil (1) est configuré isolé thermiquement au moins dans la zone des deux parois (6) et dans une zone limitrophe du réceptacle des plaques chauffantes.

11. Poste d'accueil selon l'une des revendications précédentes,
**caractérisé en ce que**
tous les joints qui étanchent par rapport à son environnement le volume (10) limité par l'élément d'obturation (8) et contenant les plaques chauffantes (5), appliquent exclusivement contre des composants du poste d'accueil (1).

12. Poste d'accueil selon la revendication 11,
**caractérisé en ce que**
l'élément d'obturation (8) applique, lorsqu'en position fermée, contre une surface d'étanchéité qui est prévue en bas contre le réceptacle des plaques chauffantes.

13. Poste d'accueil selon la revendication 12,
**caractérisé en ce que**
la surface d'étanchéité est configurée sous forme de joint élastique.
